# EUROPEAN PATENT SPECIFICATION

(11) **EP 3 309 767 B1**
(45) Date of publication and mention of the grant of the patent: **01.01.2020**
(21) Application number: 15894910.7
(22) Date of filing: 09.06.2015
(51) Int. Cl.: G06K 9/00, G08G 1/16

(54) **TRAFFIC SIGNAL DETECTION DEVICE AND TRAFFIC SIGNAL DETECTION METHOD**
SIGNALGEBERERKENNUNGSVORRICHTUNG UND SIGNALGEBERERKENNUNGSVERFAHREN
DISPOSITIF DE DÉTECTION DE FEU DE CIRCULATION ET PROCÉDÉ DE DÉTECTION DE FEU DE CIRCULATION

(43) Date of publication of application: 18.04.2018
(73) Proprietor: Nissan Motor Co., Ltd., Yokohama-shi, Kanagawa 221-0023 (JP)
(72) Inventor: YAMANOI, Daiki, Atsugi-shi Kanagawa 243-0123 (JP); MATSUO, Haruo, Atsugi-shi Kanagawa 243-0123 (JP); OKI, Takahiko, Atsugi-shi Kanagawa 243-0123 (JP); SUZUKI, Akira, Atsugi-shi Kanagawa 243-0123 (JP)
(74) Representative: Grünecker Patent- und Rechtsanwälte PartG mbB
(86) International application number: PCT/JP2015/066615
(87) International publication number: WO 2016/199225

(56) References cited:
- WO-A1-2007/102065
- JP-A- 2005 347 945
- JP-A- 2007 241 469
- JP-A- 2013 045 176
- US-A1- 2012 288 138
- US-A1- 2012 288 138
- US-A1- 2015 012 200
- NATHANIEL FAIRFIELD ET AL: "Traffic light mapping and detection", ROBOTICS AND AUTOMATION (ICRA), 2011 IEEE INTERNATIONAL CONFERENCE ON, IEEE, 9 May 2011 (2011-05-09), pages 5421-5426, XP032033986, DOI: 10.1109/ICRA.2011.5980164 ISBN: 978-1-61284-386-5

## Description

### TECHNICAL FIELD

The present invention relates to a traffic signal detection device and a traffic signal detection method for detecting a traffic signal.

### BACKGROUND ART

A system is proposed which determines an image processing region for image data obtained by capturing an image of a front of a vehicle, on the basis of a position of the traffic signal predicted from a shape of a road on which the vehicle is travelling and a current position of the vehicle, and detects the traffic signal from the image processing region (see Patent Literature 1). Such a system reduces processing load in image processing and reduces erroneous detection for other than a traffic signal by limiting a target region of image processing. A traffic signal detection device according to the preamble of independent claim 1 is disclosed in Patent Literature 2.

### CITATION LIST

### PATENT LITERATURE

Patent Literature 1: Japanese Patent Laid-Open Publication No. 2007-241469
Patent Literature 1: US Patent Application Publication No. 2015/0012200 A1

### SUMMARY OF INVENTION

However, the technology described in Patent Literature 1 does not consider any error included in a current position of the detected vehicle when determining the image processing region. Since an error of the current position of the vehicle significantly changes in accordance with the running condition and surrounding environment of the vehicle, with the technology described in Patent Literature 1, when there is an error of the current position of the vehicle, the traffic signal may deviate from the image processing region and may not be detected in some cases.

The present invention has been made in view of the above problem, and an object thereof is to provide a traffic signal detection device and a traffic signal detection method which can improve detection accuracy of traffic signals.

The object is solved by a traffic signal detection device according to claim 1 and by a traffic signal detection method according to claim 7. In an embodiment disclosed herein, a traffic signal detection device sets a third detection region by correcting a first detection region set on the basis of the relative position of a traffic signal on the basis of lamp candidates detected from an actual environment, and detects the traffic signal from the third setting region.

### BRIEF DESCRIPTION OF DRAWINGS

[Fig. 1] Fig. 1 is a block diagram schematically illustrating a basic configuration of a traffic signal detection device according to an embodiment of the present invention.
[Fig. 2] Fig. 2 is a block diagram illustrating a configuration and dataflow of the traffic signal detection device according to an embodiment of the present invention.
[Fig. 3] Fig. 3 is an explanatory diagram of a second detection region used in the traffic signal detection device according to an embodiment of the present invention.
[Fig. 4] Fig. 4 is an explanatory diagram of lamp candidates used in the traffic signal detection device according to an embodiment of the present invention.
[Fig. 5] Fig. 5 is a block diagram illustrating a configuration and dataflow of a traffic signal detection region setting unit provided in the traffic signal detection device according to an embodiment of the present invention.
[Fig. 6] Fig. 6 is an explanatory diagram of a first detection region used in the traffic signal detection device according to an embodiment of the present invention.
[Fig. 7] Fig. 7 is a flowchart illustrating an exemplary signal detection method by the traffic signal detection device according to an embodiment of the present invention.
[Fig. 8] Fig. 8 is a flowchart illustrating an exemplary process of a correction calculator provided in the traffic signal detection device according to an embodiment of the present invention.
[Fig. 9] Fig. 9 is an explanatory diagram of an exemplary process of the correction calculator provided in the traffic signal detection device according to an embodiment of the present invention when all traffic signal lamps are detected as lamp candidates.
[Fig. 10] Fig. 10 is an explanatory diagram of an exemplary process of the correction calculator provided in the traffic signal detection device according to an embodiment of the present invention when roll rotation occurs in a captured image.
[Fig. 11] Fig. 11 is an explanatory diagram of an exemplary process of the correction calculator provided in the traffic signal detection device according to an embodiment of the present invention when only two lamp candidates are detected.
[Fig. 12] Fig. 12 is an explanatory diagram of an exemplary process of the correction calculator provided in the traffic signal detection device according to an embodiment of the present invention when the number of detected lamp candidates is larger than the number of first detection regions.
[Fig. 13] Fig. 13 is an explanatory diagram of an exemplary process of the correction calculator provided in the traffic signal detection device according to an embodiment of the present invention when the number of detected lamp candidates is larger than the number of first detection regions.
[Fig. 14] Fig. 14 is an explanatory diagram of an exemplary process of the correction calculator provided in the traffic signal detection device according to an embodiment of the present invention when the number of detected lamp candidates is larger than the number of first detection regions.
[Fig. 15] Fig. 15 is an explanatory diagram of an exemplary process of the correction calculator provided in the traffic signal detection device according to an embodiment of the present invention when the number of detected lamp candidates is less than the number of first detection regions.
[Fig. 16] Fig. 16 is an explanatory diagram of an exemplary process of the third detection region setting unit in the traffic signal detection device according to an embodiment of the present invention when a scale with respect to the entire image is also changed.

### DESCRIPTION OF EMBODIMENTS

With reference to the drawings, embodiments of the present invention will be described. In the description of the drawings, the same or similar parts are denoted by the same or similar reference signs, and overlapping descriptions are omitted.

### (Traffic Signal Detection Device)

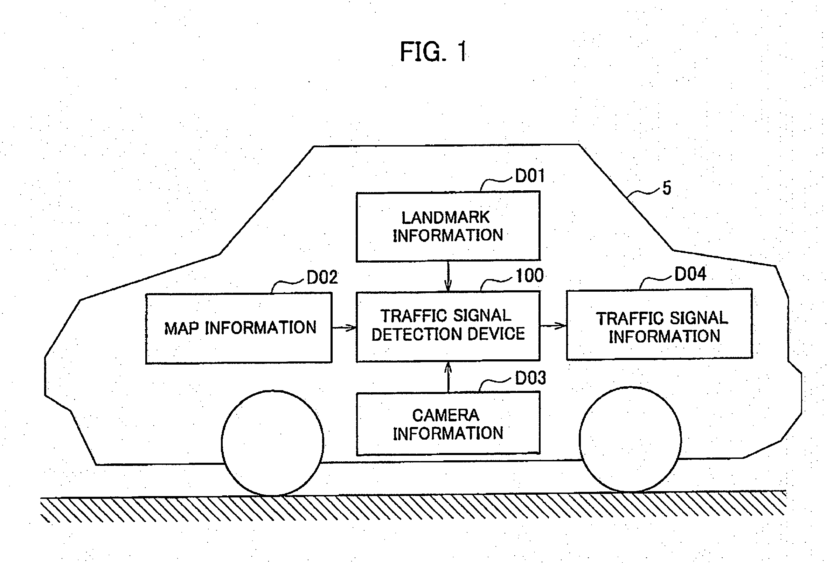

As shown in Fig. 1, a traffic signal detection device 100 according to the present embodiment detects, from an image captured by an image capturing unit (camera) mounted in a vehicle (mobile object) 5, a traffic signal installed around a road on which the vehicle 5 is travelling. The traffic signal detection device 100 receives inputs of landmark information D01, map information D02, and camera information D03. The traffic signal detection device 100 outputs a detection result of the traffic signal as traffic signal information D04, on the basis of the landmark information D01, the map information D02, and the camera information D03.

The landmark information D01 is used to detect a current position (self-position) on the map of the vehicle 5 which is travelling in an actual environment. Landmarks include a characteristic object provided on the ground (terrestrial landmarks), and a GPS satellite that transmits GPS signals receivable by the vehicle 5. For example, the landmark information D01 contains positional information on terrestrial landmarks on the map. The map information D02 contains positional information, such as a shape of a road on which the vehicle 5 is travelling, and positional information, such as terrestrial landmarks in which positions in an actual environment and positions on the map are associated with each other beforehand. The camera information D03 is used to extract an image of the surroundings (e.g., the front) of the vehicle from the image capturing unit For example, information on zooming, panning, and tilting for determining an image capturing direction, information for determining the resolution of the image and the like are set.

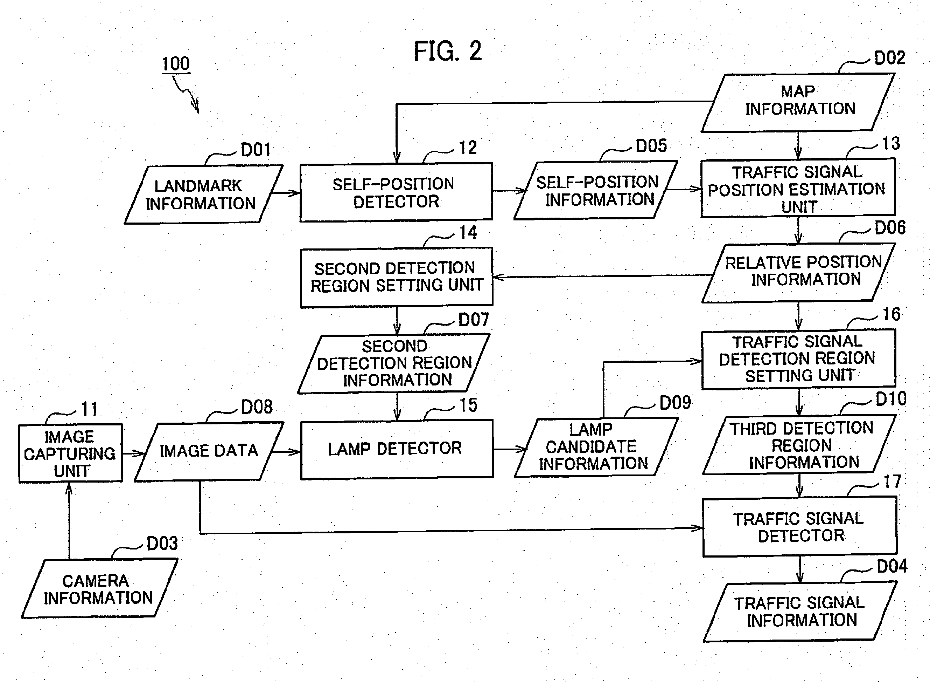

As shown in Fig. 2, the traffic signal detection device 100 includes an image capturing unit (camera) 11, a self-position detector 12, a traffic signal position estimation unit 13, a second detection region setting unit 14, a lamp detector 15, a traffic signal detection region setting unit 16, and a traffic signal detector 17.

The image capturing unit 11 is mounted in the vehicle 5 to capture and obtain an image of the surroundings of the vehicle 5. The image capturing unit 11 includes a solid-state imaging element, such as a CCD or a CMOS, and obtains digital images for which image processing can be executed. The image capturing unit 11 sets an angle of view, vertical and horizontal angles, resolution, and the like, of a camera on the basis of the camera information D03, and outputs an image captured for a necessary region of the surroundings of the vehicle 5 as image data D08.

The self-position detector 12 detects, on the basis of the landmark information D01 and the map information D02, a current position (self-position) on a map of the vehicle 5. For example, the landmark information D01 is information on the relative position, with respect to the vehicle 5, of a terrestrial landmark (a store, a sight, and a sightseeing spot, etc.) detected by a sensor, such as an in-vehicle camera or a laser radar. The self-position detector 12 can detect a current position (self-position) on the map of the vehicle 5 by checking the positional information of the terrestrial landmark of the landmark information D01 with the positional information of the terrestrial landmark of the map information D02.

Here, in the present embodiment, the "position" includes coordinates and an attitude. Specifically, the position of a terrestrial landmark includes the coordinates and attitude of the terrestrial landmark, and the current position of the vehicle 5 includes the coordinates and attitude on the map of the vehicle 5. The self-position detector 12 outputs the coordinates represented in a reference Cartesian coordinate system and the attitudes in the rotational directions of the respective coordinate axes, as self-position information D05.

For example, the self-position detector 12 detects an initial position on the map of the vehicle 5 using the landmark information D01 and the map information D02, and detects a current position (self-position) on the map of the vehicle 5 by cumulatively adding the amount of movement of the vehicle 5 to the initial position. The self-position detector 12 can estimate the amount of movement of the vehicle 5 per unit time, i.e., an amount of change in coordinates and an attitude, by using an odometry, a radar, a gyro sensor, a yaw rate sensor, a steer-angle sensor or the like.

The traffic signal position estimation unit 13 estimates the relative position of a traffic signal with respect to the vehicle 5 from the map information D02 and the self-position information D05. The traffic signal position estimation unit 13 estimates relative coordinates of the traffic signal with respect to the vehicle 5, from coordinate information on the map of a traffic signal present in the surroundings of the vehicle 5 and coordinate and attitude information on a current position on the map of the vehicle. The traffic signal position estimation unit 13 outputs the estimated relative coordinates of the traffic signal as relative position information D06. The traffic signal indicated by the relative position information D06 is a traffic signal for presenting a traffic light to the vehicle 5, in other words, a traffic signal to be followed by the vehicle.

When it is predicted that a plurality of traffic signals is present on the image captured by the image capturing unit 11 from the relative position of the traffic signal indicated by the relative position information D06, the second detection region setting unit 14 sets a second detection region including the plurality of predicted traffic signals on the image. Because the image capturing unit 11 is fixed to the vehicle, when the angle of view and the image capturing direction of the image capturing unit 11 are determined, the second detection region setting unit 14 can predict a region of the traffic signals on the image from the relative position information D06. The second detection region setting unit 14 sets a second detection region including the plurality of traffic signals on the basis of the predicted region of the traffic signals on the image and outputs the second detection region as second detection region information D07.

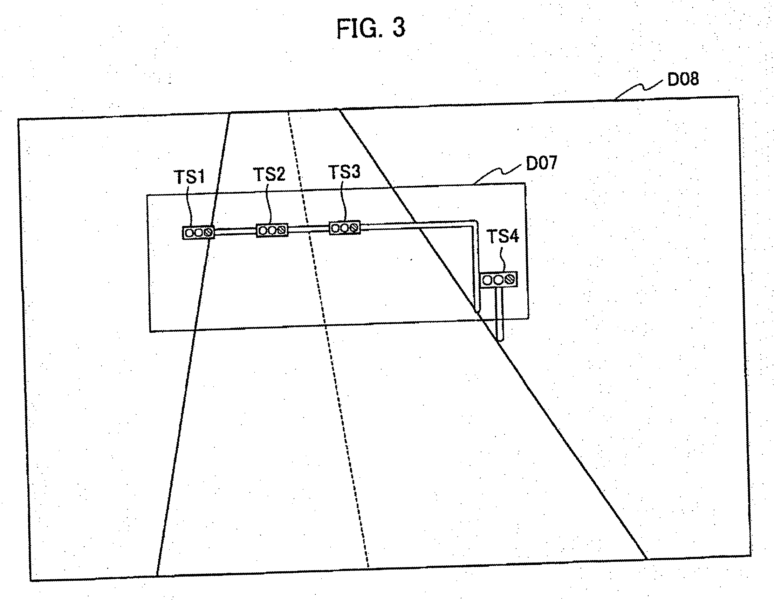

In order that the respective traffic signals do not deviate from the second detection region even if the behavior of the vehicle 5 and the self-position information D05 include errors, the second detection region setting unit 14 considers these errors and sets a second detection region including the entire region of the predicted traffic signals on the image. For example, as shown in Fig. 3, when it is predicted that there is a plurality of traffic signals TS1 to TS4 on the image indicated by the image data D08, the second detection region information D07 is set to have a predetermined margin in consideration of the error at the upper, lower, right and left ends of the regions of the plurality of traffic signals TS1 to TS4.

The lamp detector 15 performs image processing for detecting a lamp of the traffic signal on the second detection region of an image captured by the image capturing unit 11 and thereby detects lamp candidates having the feature of the lamp of the traffic signal from the second detection region. For example, the lamp detector 15 extracts pixels that flash at a specific cycle based on the alternating cycle of commercial power supplies and then detects a region thereof as a lamp candidate. Alternatively, the lamp detector 15 can detect lamp candidates using hue and shape similarity determination processing. As described above, the lamp detector 15 can detect lamp candidates using various image processing methods or a combination thereof. The lamp detector 15 outputs the position and region on the image of the detected lamp candidates, as lamp candidate information D09.

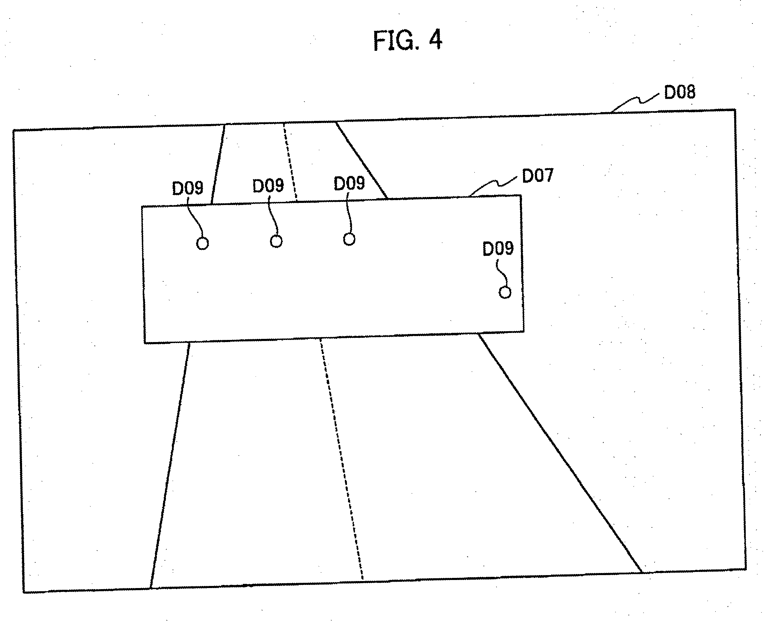

Note that the lamp detector 15 performs image processing on only the second detection region set at a part of the image instead of the entire region of the image captured by the image capturing unit 11, and thus can reduce the processing load and processing time for detecting lamp candidates. However, the second detection region may be set, by the second detection region setting unit 14, as the entire region of the image captured by the image capturing unit 11. For example, in the example shown in Fig. 3, when the lamp detector 15 detects lamp candidates from the second detection region, the lamp candidate information D09 is set to the region of the lamps which light in the respective traffic signals TS1 to TS4, as shown in Fig. 4.

The traffic signal detection region setting unit 16 sets a third detection region, which is narrower than the second detection region and corresponds to the respective traffic signals, on the image captured by the image capturing unit 11, on the basis of the relative position information D06 and the lamp candidate information D09, and outputs the third detection region as third detection region information D10. Detailed description of the traffic signal detection region setting unit 16 will be described later.

The traffic signal detector 17 performs image processing for detecting traffic signal on the third detection region of the image captured by the image capturing unit 11, and thus detects a traffic signal from the third detection region to output the traffic signal as the traffic signal information D04. For example, the traffic signal detector 17 stores feature patterns of an entire image including a traffic signal housing and a lamp beforehand, and detects higher similarity as a traffic signal by using pattern matching of the image in the third detection region. A method similar to that of the lamp detector 15 may be combined, or a traffic signal can be detected from the third detection region using various image processing methods or a combination thereof. Since the third detection region is narrower than the second detection region, even the method similar to that of the lamp detector 15 can detect a traffic signal, excluding other than the lamp of the traffic signal, of the lamp candidates detected in the second detection region.

The self-position detector 12, the traffic signal position estimation unit 13, the second detection region setting unit 14, the lamp detector 15, the traffic signal detection region setting unit 16 and the traffic signal detector 17 are implemented by a microcontroller including, for example, a central processing unit (CPU), a memory and an input/output unit. In this case, the CPU executes computer programs preinstalled in the microcontroller to configure the plurality of information processing units (12 to 17), respectively. The microcontroller may be used also as an electronic control unit (ECU) used for other control related to the vehicle 5, such as automatic driving control, for example.

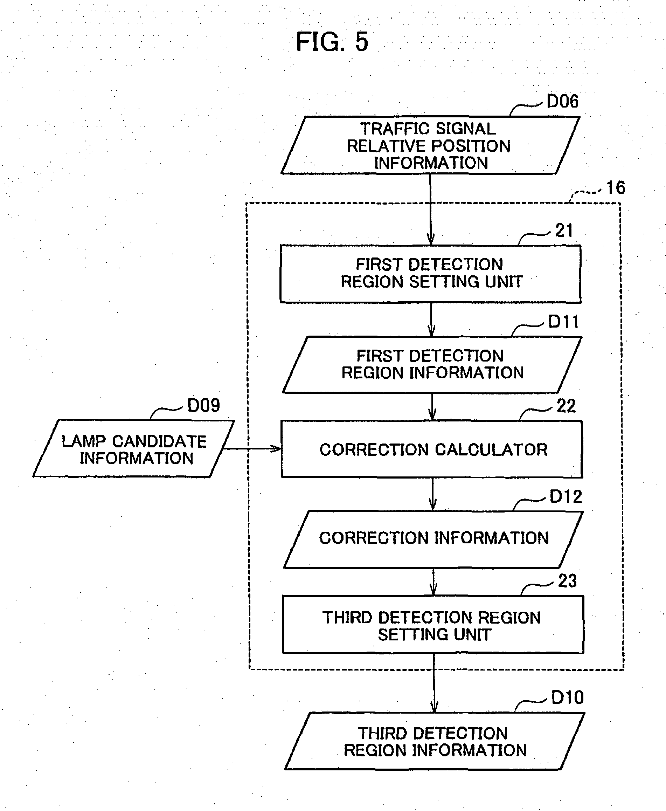

As shown in Fig. 5, the traffic signal detection region setting unit 16 includes a first detection region setting unit 21, a correction calculator 22, and a third detection region setting unit 23.

The first detection region setting unit 21 sets a first detection region on the image for each traffic signal predicted to be present on the image captured by the image capturing unit 11 from the relative position of the traffic signal indicated by the relative position information D06. Because the image capturing unit 11 is fixed to the vehicle, when the angle of view and the image capturing direction of the image capturing unit 11 are determined, the first detection region setting unit 21 can predict a region of a traffic signal on the image from the relative position information D06. The second detection region setting unit 14 sets a first detection region for each of the predicted traffic signals and outputs first detection region information D11.

For example, the first detection region setting unit 21 may set the first detection region to include the traffic signal housing so that the first detection region can include the traffic signal regardless of which lamp in the traffic signal is lit.

Alternatively, the first detection region setting unit 21 may set the first detection region in consideration of the possibility that the self-position information D05 deviates in the travelling direction of the vehicle 5. For example, when the distance from the vehicle 5 to the traffic signal is calculated to be 60 m on the basis of the self-position information D05, it is assumed that the actual distance from the vehicle 5 to the traffic signal is 50 m. In this case, the size of the traffic signal on the actual image is 60/50 times the size of the traffic signal on the image predicted from the self-position information D05. Moreover, when the distance from the vehicle 5 to the traffic signal deviates, the relative position information D06 also deviates. For example, in the example shown in Fig. 3, when the distance to the traffic signal that is 50 m ahead is calculated to be 60 m, the traffic signals TS I to TS3 at the back shift to the upper left, and the traffic signal TS4 in the front shifts to the upper right. Thus, the first detection region setting unit 21 may set, in consideration of an error that may occur in the self-position information D05, a first detection region obtained by adding a region that can compensate for the deviation on the image of the traffic signal.

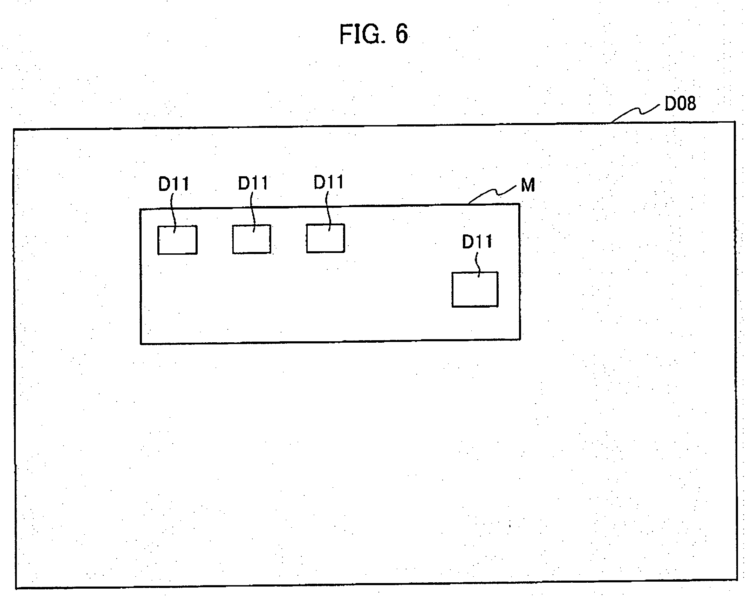

When the traffic signals TS1 to TS4 are predicted as shown in Fig. 3, the first detection region setting unit 21 sets first detection regions to regions corresponding to the respective traffic signals TS1 to TS4 as shown in Fig. 6, and generates a mask image M that masks the image excluding the first detection regions. The first detection region setting unit 21 outputs the mask image M as the first detection region information D11.

The correction calculator 22 calculates, on the basis of the lamp candidate information D09 and the first detection region information D11, a correction amount (correction value) for a first detection region. The correction calculator 22 checks the positions of the lamp candidates detected in the second detection region with the first detection regions of the mask image M, and locates a position in which the positions of the lamp candidates most closely correspond to the first detection regions of the mask image M. The correction calculator 22 calculates a correction value required to correct the mask image M to the position in which the positions of the lamp candidates most closely correspond to the first detection regions of the mask image M, and outputs the correction value as correction information D12. Detailed description of the correction calculator 22 will be described later.

The third detection region setting unit 23 corrects, on the basis of the correction value indicated by the correction information D12, the positions on the image of the first detection regions indicated by the first detection region information D11, sets a third detection region on the image captured by the image capturing unit 11 by setting the corrected positions on the image of the first detection regions as a third detection region, and outputs the third detection regions as the third detection region information D10.

### (Traffic Signal Detection Method)

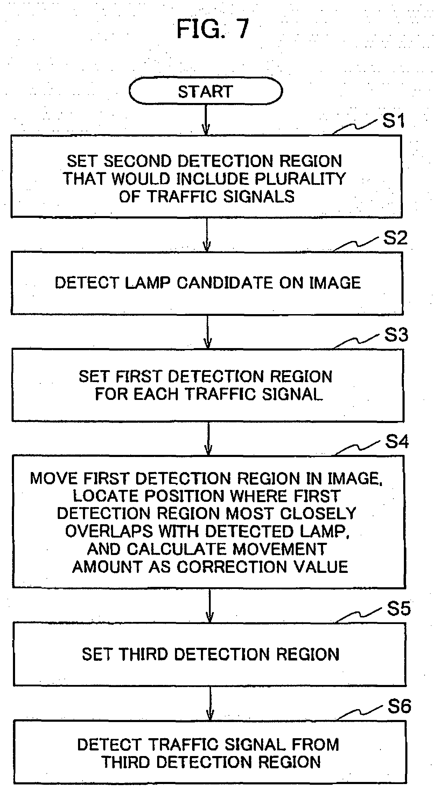

Hereinbelow, an exemplary traffic signal detection method by the traffic signal detection device according to the present embodiment will be described using the flowchart of Fig. 7.

In Step S1, when it is predicted that a plurality of traffic signals is present on the image on the basis of the relative position information D06, the second detection region setting unit 14 sets a second detection region including the plurality of predicted traffic signals, on the image captured by the image capturing unit 11.

In Step S2, the lamp detector 15 performs image processing for detecting lamps of the traffic signals on the image of the second detection region, and thereby detects lamp candidates having the feature of the lamp of the traffic signal from the second detection region. The positions and regions on the image of the detected lamp candidates are output as the lamp candidate information D09.

In Step S3, the first detection region setting unit 21 sets, on the basis of the relative position information D06 of the traffic signals, a first detection region on the image for each of the traffic signals predicted to be present on the image captured by the image capturing unit 11.

In Step S4, the correction calculator 22 locates a position in which the positions of the lamp candidates detected in the second detection region most closely correspond to the first detection regions of the mask image M. Checking is performed by moving the mask image M on the image to locate a position in which the first detection regions most closely overlap with and correspond to the positions of the lamp candidates. The correction calculator 22 calculates an amount of movement of the mask image M to the position in which the positions of the lamp candidates most closely correspond to the first detection regions of the mask image M at this time, as a correction value required to correct to the position in which the positions of the lamp candidates most closely correspond to the first detection regions of the mask image M.

In Step S5, the third detection region setting unit 23 performs correction by moving the first detection region by the correction value calculated by the correction calculator 22, and sets the corrected position on the image of the first detection regions as third detection regions.

In Step S6, the traffic signal detector 17 performs image processing for detecting traffic signal on the third detection regions of the image captured by the image capturing unit 11, and thereby detects traffic signals from the third detection region.

### (Processing of Correction Calculator 22)

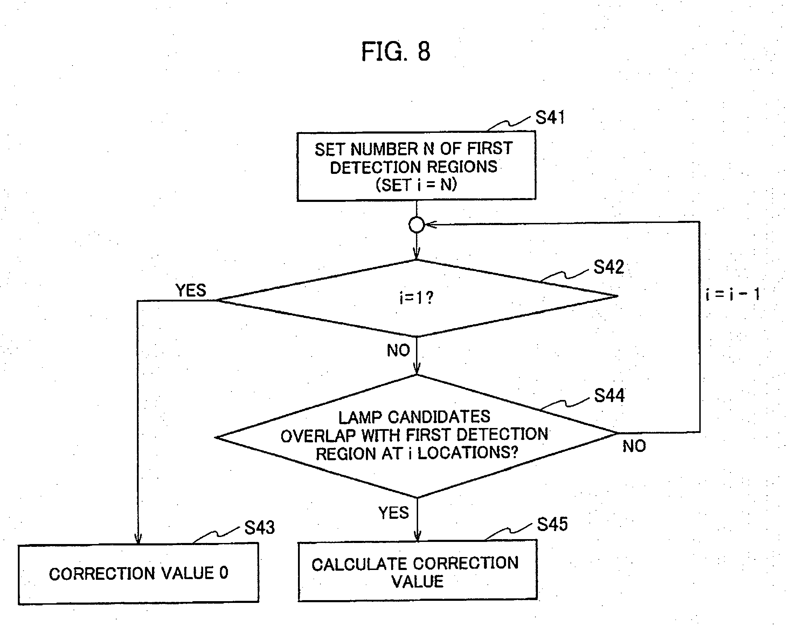

Hereinbelow, processing of the correction calculator 22 in Step S4 of the flowchart of Fig. 7 will be described using the flowchart shown in Fig. 8.

In Step S41, the correction calculator 22 sets the initial value of the counter value i to N, where N is the number of the first detection regions. In Step S42, the correction calculator 22 determines whether or not the counter value i is one. The correction calculator 22 proceeds the process to Step S43 when the counter value i is one, and calculates the correction value as zero. The correction calculator 22 proceeds the process to Step S44 when the counter value i is not one.

In Step S44, the correction calculator 22 checks the first detection regions of the mask image M with the positions of the lamp candidates detected in the second detection region and determines whether or not there is a position where a number of the positions of the lamp candidates corresponding to (overlapping with) the first detection regions is i. When a position in which the number is i can be located, the correction calculator 22 proceeds the process to Step S45, and calculates an amount of movement from the first detection regions to the position in which the number is i as a correction value. When a position in which the number is i cannot be located, the correction calculator 22 decrements the counter value i and returns the process to Step S42. The correction value is set to the movement coordinates (x, y) and rotational angle (θ) of the first detection regions when the positions of the lamp candidates most closely correspond to the first detection regions of the mask image M in the last Step S44.

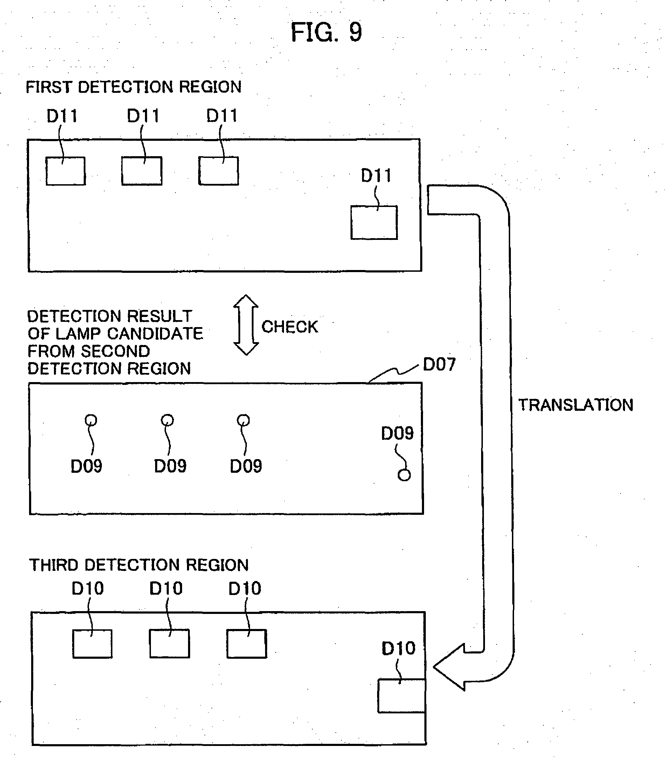

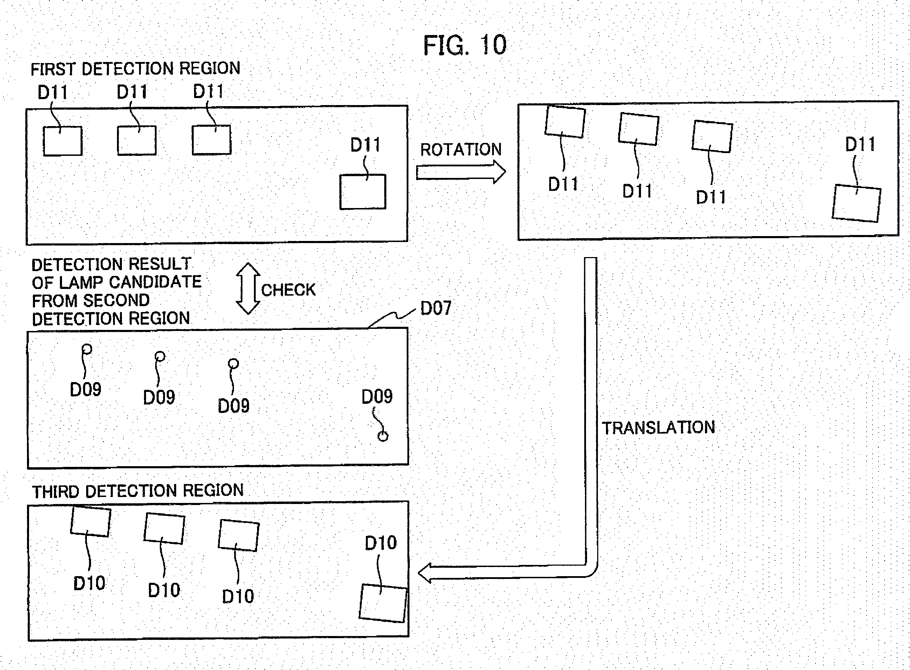

For example, Fig. 9 is an example of calculation of a correction value when the number N of the first detection regions is four, and the lighting lamps of all the traffic signals are detected as lamp candidates. It is assumed that all the first detection regions overlap with the positions of the lamp candidates. In this case, the correction calculator 22 calculates a correction value to set a position where all the lamp candidates are close to the centers of the respective first detection regions as the positions of the lamp candidates most closely corresponding to the first detection regions. In the example shown in Fig. 10, the correction calculator 22 calculates an amount of movement of the mask image M by translating the respective first detection regions to the lower right. The correction value is calculated as movement coordinates (pixel) (x, y) and a rotational angle θ (=0).

Fig. 10 is an example of calculation of a correction value when roll rotation occurs in the image captured by the image capturing unit 11 although the number N of the first detection regions is four, and the lighting lamps of all the traffic signals are detected as lamp candidates. It is assumed that the number in which the first detection regions correspond to the positions of the lamp candidates is less than four. Roll rotation may occur due to the behavior of the vehicle 5. In this case, the correction calculator 22 sets i=4 by rotating the mask image M by the rotational angle θ. Furthermore, the correction calculator 22 locates a position in which the positions of the respective lamp candidates are close to the centers of the first detection regions and thereby calculates a correction value. In this case, the correction value is calculated as movement coordinates (x, y) and a rotational angle θ.

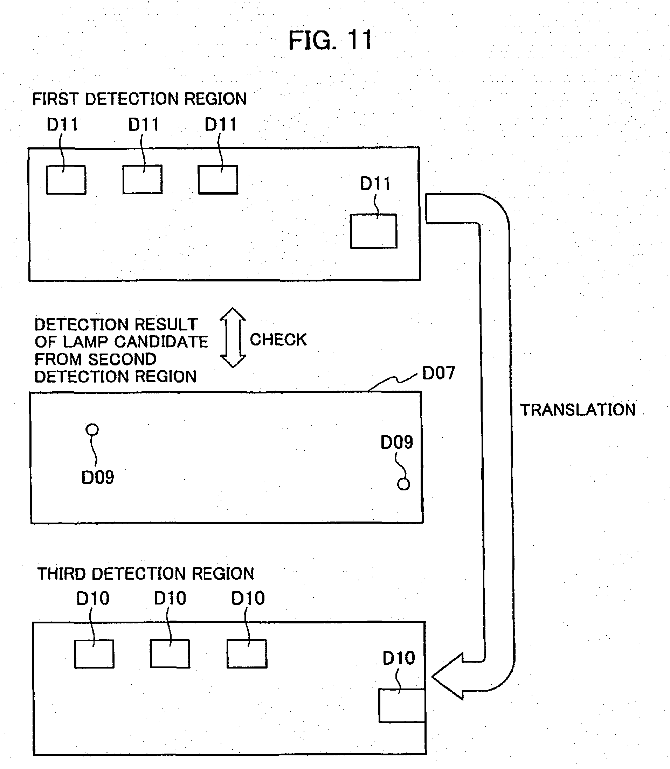

Fig. 11 is an example of calculation of a correction value when only two lamp candidates can be detected due to inhibition of the angle of view of the image capturing unit 11 and the like although the number N of the first detection regions is four. In this case, the correction calculator 22 locates a position in which the positions of the two lamp candidates overlap with the respective first detection regions of the mask image M by translating the mask image M to the lower right (i=2). Furthermore, the correction calculator 22 locates a position which die positions of two lamp candidates are close to the centers of the respective first detection regions of the mask image M in a state where the counter value i is two, and calculates a correction value. The correction value is calculated as movement coordinates (x, y) and a rotational angle θ (=0).

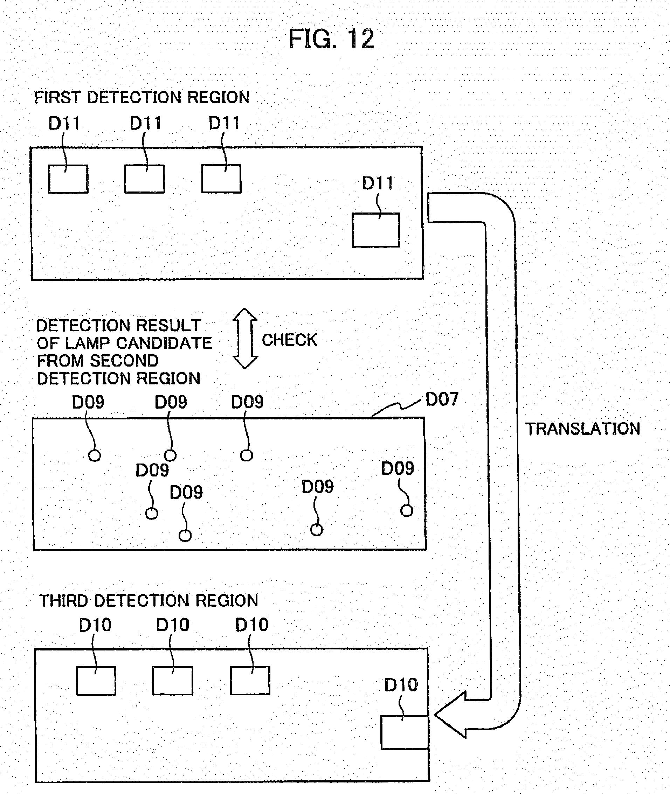

Fig. 12 is an example of calculation of a correction value when the number of detected lamp candidates is larger than the number of the first detection regions. For example, it is assumed that seven lamp candidates including erroneous detections are detected due to objects in the surroundings of the vehicle 5 and the like although the number N of the first detection regions is four. In this case, the correction calculator 22 calculates a correction value to set, by translating the mask image M to the lower right, a position in which the positions of the four lamp candidates are close to the centers of the respective first detection regions of the mask image M, to a position in which the positions of the lamp candidates most closely correspond to the first detection regions of the mask image M (i=4). The correction value is calculated as movement coordinates (x, y) and a rotational angle θ (=0).

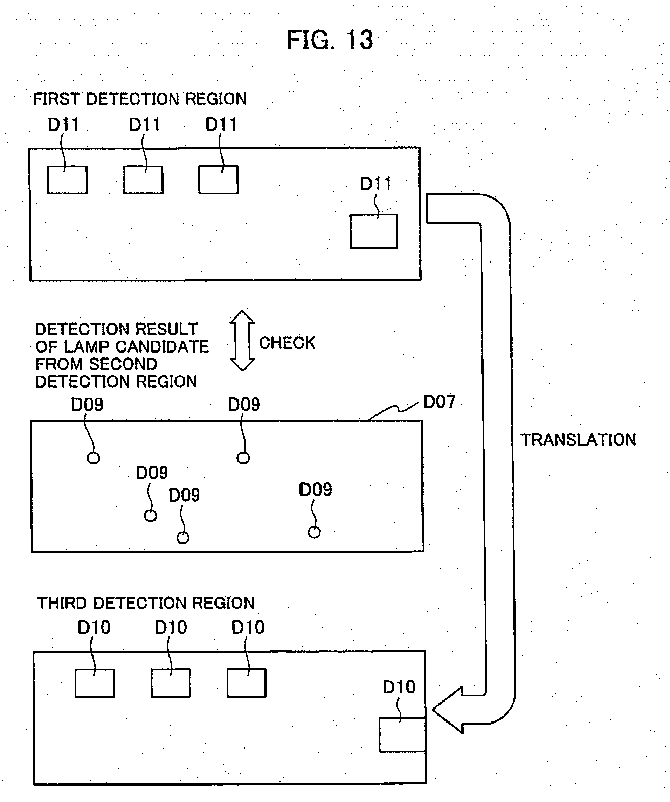

Fig. 13 is an example of calculation of a correction value when the number of detected lamp candidates is larger than the number of first detection regions. For example, it is assumed that five lamp candidates including three erroneous detections are detected due to inhibition of the angle of view, objects in the surroundings, or the like, although the number N of the first detection regions is four. In this case, the correction calculator 22 calculates a correction value to set, by translating the mask image M to the lower right, a position in which the positions of two lamp candidates are close to the centers of the respective first detection regions of the mask image M, to the positions of the lamp candidates most closely correspond to the first detection regions of the mask image M (i=2). The correction value is calculated as movement coordinates (x, y) and a rotational angle θ (=0).

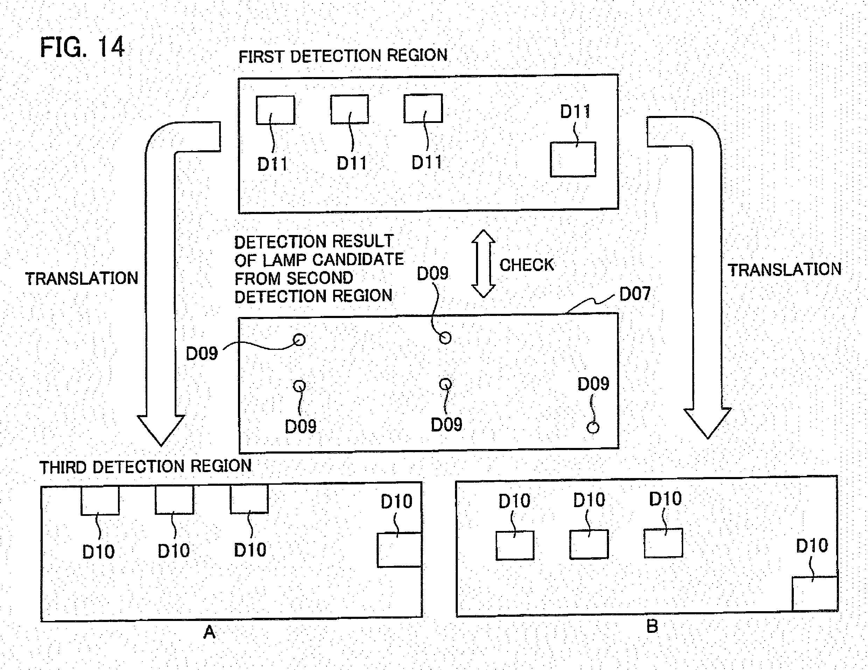

Fig. 14 is an example of calculation of a correction value when the number of detected lamp candidates is larger than the number of the first detection regions. For example, it is assumed that five lamp candidates are detected due to inhibition of the angle of view, objects in the surroundings, or the like, although the number N of the first detection regions is four. In this case, the correction calculator 22 calculates, by translating the mask image M to the upper right or lower right, a correction value so that the positions of the lamp candidates most closely correspond to the first detection regions of the mask image M. When the first detection regions of the mask image M are corrected to the upper right and the third detection regions are assumed to be A, i=2. When the first detection regions of the mask image M are corrected to the lower right and the third detection regions are assumed to be B, i=3. In this case, because one of the lamp candidates may be erroneously detected, the correction calculator 22 may select a smaller correction value (amount of movement of the mask image M). The correction value is calculated like movement coordinates (x, y) and a rotational angle θ (=0).

Alternatively, as another selection method, when a plurality of correction values can be calculated, the correction calculator 22 may discard the image of the frame in which a lamp candidate is detected, allowing the lamp detector 15 to detect lamp candidates for an image of a next frame. As a result, the correction calculator 22 can prevent output of an erroneous detection result of a traffic signal.

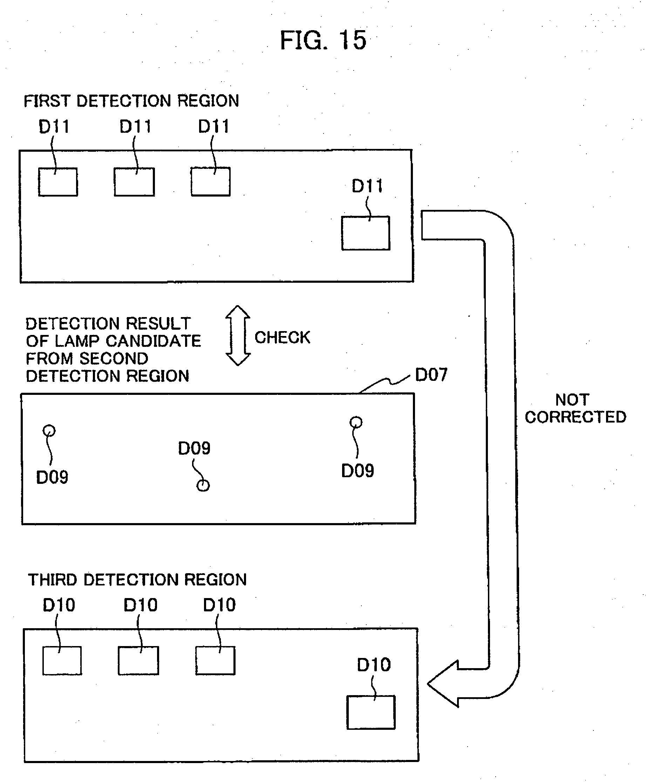

Fig. 15 is an example of calculation of a correction value when the number of detected lamp candidates is less than the number of the first detection regions. For example, it is assumed that three lamp candidates are detected due to inhibition of angle of view, objects in the surroundings, or the like, although the number N of the first detection regions is four. Moreover, it is assumed that the number of the first detection regions corresponding to the lamp candidates is one without the first detection regions of the mask image M corrected, and the number of the first detection regions corresponding to the positions of the lamp candidates does not exceed one regardless of how one mask image M is moved. In this case, the correction calculator 22 sets a correction value to zero (movement coordinates (0,0), rotational angle θ (=0)). In other words, the traffic signal detector 17 detects traffic signals from the first detection regions indicated by the first detection region information D11. Note that the correction calculator 22 similarly sets a correction value to zero also in a case where the number of detected lamp candidates is one.

In examples shown in Figs. 9 to 15, the third detection region setting unit 23 sets the third detection region by translating the coordinates (x, y) of the first detection region indicated by the first detection region information D11, without changing the scale with respect to the entire image, and in some cases, rotating by the rotational angle θ, but the scale of the third detection region with respect to the entire image may be changed with respect to that of the first detection region.

The third detection region setting unit 23 may set the third detection region by changing the scale of the first detection regions with respect to the entire image with the center point of each of the first detection regions corrected by translating or the center point of the lamp candidate overlapping with the corrected first detection regions being as a reference. The scale of the third detection region can be set so that the size of the traffic signal housing is predicted on the basis of the size of the lamp candidates and then the traffic signal housing is included in the third detection region on the image. As a result, it is also adaptable to a case where the estimation error of the current position in the travelling direction of the vehicle is large.

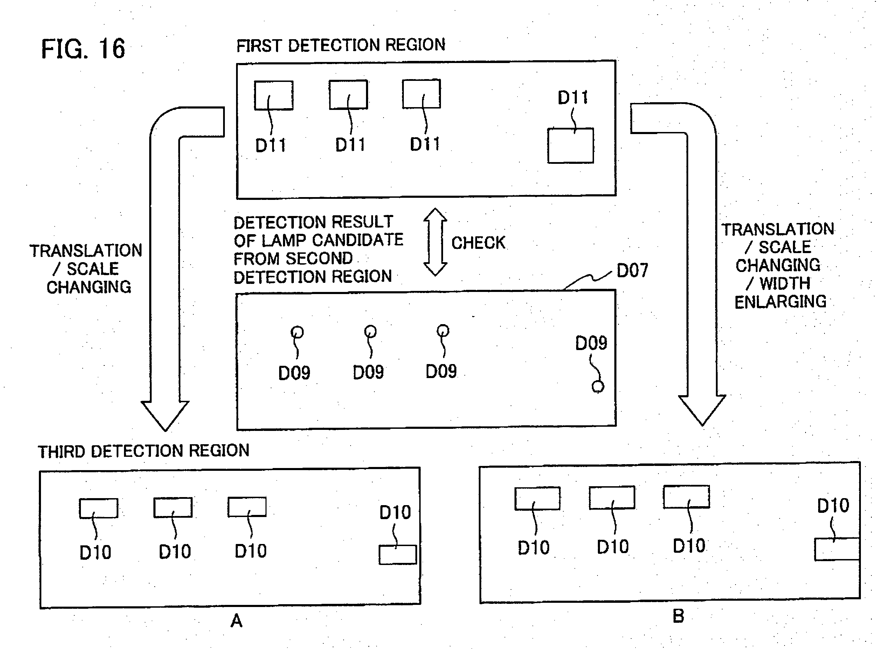

For example, Fig. 16 is an example of calculation of a correction value when the scale with respect to the entire image is also changed. The first detection region is translated and the scale with respect to the entire image is changed, so that it is also adaptable to a case where estimation errors of a current position in the travelling direction of the vehicle are large. In Fig. 16A, when estimation errors of a current position in the travelling direction of the vehicle are present in the direction close to the traffic signal, the third detection region is set by translating the first detection region and reducing the scale with respect to the entire image. Fig. 16B is an example in which the first detection region is translated and the scale with respect to the entire image is changed, and additionally the width is enlarged in order to include the traffic signal housing on the assumption that it is unknown which lamps of the traffic signals are lit. When it is set to include the traffic signal housing, it is set to be at least twice the size on the image of the traffic signal in an array direction of the lamp. As a result, even when it is unknown which lamps of the traffic signals are lit, it is easier to locate a position where the positions of the lamp candidates most closely match the first detection regions.

With the traffic signal detection device 100 according to the present embodiment, the first detection regions set on the basis of the relative position of the traffic signal are corrected on the basis of lamp candidates detected in an actual environment, so that a third detection region used for detecting traffic signal is set. As a result, in the traffic signal detection device according to the present embodiment, the possibility that the third detection region includes a traffic signal on the image is increased, and detection accuracy of traffic signals can be improved.

Moreover, with the traffic signal detection device 100 according to the present embodiment, when the scale of the third detection region with respect to the entire image is equal to that of the first detection region, the third detection region is set on the basis of the positions of the lamp candidates, so that it is set at the same size as the first detection region, at a position appropriate for traffic signal detection. Accordingly, the traffic signal detection device 100 can reduce erroneous detection of traffic signals and further improve detection accuracy of traffic signals.

Moreover, with the traffic signal detection device 100 according to an embodiment of the present invention, when the area of the third detection regions is smaller than that of the first detection regions, the third detection regions are set on the basis of the positions of the lamp candidates, and it is possible to execute detection processing of a traffic signal with a small area. Accordingly, the traffic signal detection device 100 can reduce erroneous detection of traffic signals, improve detection accuracy of traffic signals, and further reduce an operation amount of detection processing of traffic signals.

Moreover, with the traffic signal detection device 100 according to the present embodiment, even when only one lamp candidate is detected and the first detection region cannot be appropriately corrected, traffic signals are detected with the first detection region being as the third detection region. As a result, the traffic signal detection device 100 detects traffic signals from a detection region set on the basis of the relative position of the traffic signal, and it is possible to prevent deterioration in detection accuracy.

Moreover, with the traffic signal detection device 100 according to the present embodiment, even when the number of the first detection regions corresponding to the lamp candidates is one and the first detection region cannot be appropriately corrected, a traffic signal is detected with the first detection region being as the third detection region. As a result, in the traffic signal detection device 100, traffic signals are detected from a detection region set on the basis of the relative position of the traffic signals, and it is possible to prevent deterioration in detection accuracy.

Moreover, with the traffic signal detection device 100 according to the present embodiment, the first detection regions are corrected to a position in which the first detection regions most closely correspond to the lamp candidates, so that the third detection region is set. As a result, in the traffic signal detection device 100, the possibility that the third detection region includes a traffic signal on the image is increased, and detection accuracy of traffic signal can be further improved.

### INDUSTRIAL APPLICABILITY

According to the present invention, a traffic signal detection device and a traffic signal detection method can be provided in which a detection region set on the basis of the relative position of a traffic signal is corrected on the basis of an actual environment, and thereby detection accuracy of traffic signals is improved.

### REFERENCE SIGNS LIST

- 5: vehicle (mobile object)
- 11: image capturing unit (camera)
- 12: self-position detector
- 13: traffic signal position estimation unit
- 14: second detection region setting unit
- 17: traffic signal detector
- 21: first detection region setting unit
- 23: third detection region setting unit
- 100: traffic signal detection device

## Claims

1. A traffic signal detection device (100) comprising:
a camera (11) configured to capture an image of surroundings of a mobile object (5) and fixed to the mobile object (5) such that an angle of view and an image capturing direction of the camera (11) with respect to the mobile object (5) is determined;
a self-position detector (12) configured to detect a position of the mobile object (5) on a map;
a traffic signal position estimation unit (13) configured to estimate a relative position of a traffic signal with respect to the mobile object (5) on the basis of map information including positional information of the traffic signal that is present on the surroundings of the mobile object (5), the position of the mobile object (5) on the map, and a travelling direction of the mobile object (5);
a first detection region setting unit (21) configured to set a first detection region on the image for each traffic signal predicted to be present on the image, based on the relative position of the traffic signal with respect to the camera (11); and
a traffic signal detector (17) configured to detect traffic signals,
**characterized by**
a second detection region setting unit (14) configured to set, when it is predicted that a plurality of traffic signals is present on the image, a second detection region on the image including all of the plurality of traffic signals, based on the relative positions of the traffic signals with respect to the camera (11);
a lamp detector (15) configured to detect, from the second detection area, a lamp candidate having a feature of a lamp of a traffic signal; and
a third detection region setting unit (23) configured to set a third detection region for each of the plurality of traffic signals by correcting a position of the first detection region to cause the position of the first detection region by using at least one of translating, rotational movement, and scaling, so as to correspond to the lamp candidate,
wherein the traffic signal detector (17) is configured to detect traffic signals from the third detection region.

2. The traffic signal detection device (100) according to claim 1,
wherein the third detection region is set to have a scale with respect to the entire image equal to the scale of the first detection region with respect to the entire image.

3. The traffic signal detection device (100) according to claim 1,
wherein the third detection region is set to have an area smaller than that of the first detection region.

4. The traffic signal detection device (100) according to any one of claims 1 to 3,
wherein the traffic signal detector (17) is configured to detect a traffic signal from the first detection regions when the number of the lamp candidates detected by the lamp detector is one.

5. The traffic signal detection device (100) according to any one of claims 1 to 4,
wherein the traffic signal detector (17) is configured to detect a traffic signal from the first detection region when the number of the first detection regions corresponding to the lamp candidates is one on the image.

6. The traffic signal detection device (100) according to any one of claims 1 to 5,
wherein the third detection region setting unit (23) sets a third detection region by correcting the first detection region to a position in which the first detection region most closely corresponds to the lamp candidates on the image.

7. A traffic signal detection method, comprising:
estimating a relative position of a traffic signal with respect to a mobile object (5) on the basis of map information including positional information of the traffic signal that is present on surroundings of the mobile object (5), a position of the mobile object (5) on a map, and a travelling direction of the mobile object (5); and
setting a first detection region on an image of surroundings of the mobile object (5) captured by a camera (11) for each traffic signal predicted to be present on the image, based on the relative position of the traffic signal with respect to the camera (11), wherein the camera (11) is fixed to the mobile object (5) such that an angle of view and an image capturing direction of the camera (11) with respect to the mobile object (5) is determined,
**characterized by**
setting, when it is predicted that a plurality of traffic signals is present on the image, a second detection region on the image including all of the plurality of traffic signals, based on the relative positions of the traffic signals with respect to the camera (11);
detecting, from the second detection area, a lamp candidate having a feature of a lamp of a traffic signal;
setting a third detection region for each of the plurality of traffic signals by correcting a position of the first detection region to cause the position of the first detection region by using at least one of translating, rotational movement, and scaling, so as to correspond to the lamp candidate; and
detecting traffic signals from the third detection region.

## Patentansprüche

1. Verkehrsampel-Erfassungsvorrichtung (100), die umfasst:
eine Kamera (11), die so eingerichtet ist, dass sie ein Bild der Umgebung eines beweglichen Objektes (5) erfasst, und die an dem beweglichen Objekt (5) so befestigt ist, dass ein Blickwinkel und eine Bild-Erfassungsrichtung der Kamera (11) in Bezug auf das bewegliche Objekt (5) bestimmt werden;
eine Einrichtung (12) zum Erfassen einer eigenen Position, die so eingerichtet ist, dass sie eine Position des mobilen Objektes (5) auf einer Karte erfasst;
eine Einheit (13) zum Schätzen der Position einer Verkehrsampel, die so eingerichtet ist, dass sie eine relative Position einer Verkehrsampel in Bezug auf das bewegliche Objekt (5) auf der Grundlage von Karten-Informationen, die Positions-Informationen der Verkehrsampel einschließen, die sich in der Umgebung des beweglichen Objektes (5) befindet, der Position des beweglichen Objektes (5) auf der Karte sowie einer Fahrtrichtung des beweglichen Objektes (5) schätzt;
eine Einheit (21) zum Einstellen eines ersten Erfassungs-Bereiches, die so eingerichtet ist, dass sie einen ersten Erfassungs-Bereich auf dem Bild für jede Verkehrsampel, deren Vorhandensein auf dem Bild vorhergesagt wird, auf Basis der relativen Position der Verkehrsampel in Bezug auf die Kamera (11) einstellt; sowie
eine Einrichtung (17) zum Erfassen von Verkehrsampeln, die zum Erfassen von Verkehrsampeln eingerichtet ist,
**dadurch gekennzeichnet, dass**
eine Einheit (14) zum Einstellen eines zweiten Erfassungs-Bereiches, die so eingerichtet ist, dass sie, wenn vorhergesagt wird, dass eine Vielzahl von Verkehrsampeln auf dem Bild vorhanden ist, einen zweiten Erfassungs-Bereich auf dem Bild, der alle der Vielzahl von Verkehrsampeln einschließt, auf Basis der relativen Positionen der Verkehrsampeln in Bezug auf die Kamera (11) einstellt;
eine Leuchten-Erfassungseinrichtung (15), die so eingerichtet ist, dass sie in dem zweiten Erfassungsbereich einen Leuchten-Kandidaten erfasst, der ein Merkmal einer Leuchte einer Verkehrsampel aufweist; und
eine Einheit (23) zum Einstellen eines dritten Erfassungs-Bereiches, die so eingerichtet ist, dass sie einen dritten Erfassungs-Bereich für jede der Vielzahl von Verkehrsampeln einstellt, indem sie eine Position des ersten Erfassungs-Bereiches korrigiert und mittels Verschieben, Drehbewegung oder/und Skalieren veranlasst, dass die Position des ersten Erfassungs-Bereiches dem Leuchten-Kandidaten entspricht,
wobei die Einrichtung (17) zum Erfassen von Verkehrsampeln so eingerichtet ist, dass sie Verkehrsampeln in dem dritten Erfassungsbereich erfasst.

2. Verkehrsampel-Erfassungsvorrichtung (100) nach Anspruch 1,
wobei der dritte Erfassungs-Bereich so eingestellt wird, dass er in Bezug auf das gesamte Bild einen Maßstab hat, der dem Maßstab des ersten Erfassungs-Bereiches in Bezug auf das gesamte Bild entspricht.

3. Verkehrsampel-Erfassungsvorrichtung (100) nach Anspruch 1,
wobei der dritte Erfassungs-Bereich so eingestellt wird, dass er eine Fläche hat, die kleiner ist als die des ersten Erfassungs-Bereiches.

4. Verkehrsampel-Erfassungsvorrichtung (100) nach einem der Ansprüche 1 bis 3,
wobei die Einrichtung (17) zum Erfassen von Verkehrsampeln so eingerichtet ist, dass sie eine Verkehrsampel in dem ersten Erfassungs-Bereich erfasst, wenn die Anzahl der durch die Leuchten-Erfassungseinrichtung erfassten Leuchten-Kandidaten 1 beträgt.

5. Verkehrsampel-Erfassungsvorrichtung (100) nach einem der Ansprüche 1 bis 4,
wobei die Einrichtung (17) zum Erfassen von Verkehrsampeln so eingerichtet ist, dass sie eine Verkehrsampel in dem ersten Erfassungs-Bereich erfasst, wenn die Anzahl der den Leuchten-Kandidaten entsprechenden ersten Erfassungs-Bereiche auf dem Bild 1 beträgt.

6. Verkehrsampel-Erfassungsvorrichtung (100) nach einem der Ansprüche 1 bis 5,
wobei die Einheit (23) zum Einstellen eines dritten Erfassungs-Bereiches einen dritten Erfassungs-Bereich einstellt, indem sie den ersten Erfassungs-Bereich auf eine Position korrigiert, an der der erste Erfassungs-Bereich den Leuchten-Kandidaten auf dem Bild am nächsten kommt.

7. Verkehrsampel-Erfassungsverfahren, das umfasst:
Schätzen einer relativen Position einer Verkehrsampel in Bezug auf ein bewegliches Objekt (5) auf der Grundlage von Karten-Informationen, die Positions-Informationen der Verkehrsampel einschließen, die sich in der Umgebung des beweglichen Objektes (5) befindet, einer Position des beweglichen Objektes (5) auf einer Karte sowie einer Fahrtrichtung des beweglichen Objektes (5); und
Einstellen eines ersten Erfassungs-Bereiches auf einem von einer Kamera (11) erfassten Bild der Umgebung des beweglichen Objektes (5) für jede Verkehrsampel, deren Vorhandensein auf dem Bild vorhergesagt wird, auf Basis der relativen Position der Verkehrsampel in Bezug auf die Kamera (11); wobei die Kamera (11) so an dem beweglichen Objekt (5) befestigt ist, dass ein Blickwinkel und eine Bild-Erfassungsrichtung der Kamera (11) in Bezug auf das bewegliche Objekt (5) bestimmt werden;
**gekennzeichnet durch**
Einstellen eines zweiten Erfassungs-Bereiches auf dem Bild, der alle der Vielzahl von Verkehrsampeln einschließt, auf Basis der relativen Positionen der Verkehrsampeln in Bezug auf die Kamera (11), wenn vorhergesagt wird, dass eine Vielzahl von Verkehrsampeln auf dem Bild vorhanden ist;
Erfassen eines Leuchten-Kandidaten, der ein Merkmal einer Leuchte einer Verkehrsampel aufweist, in dem zweiten Erfassungs-Bereich;
Einstellen eines dritten Erfassungs-Bereiches für jede der Vielzahl von Verkehrsampeln durch Korrigieren einer Position des ersten Erfassungs-Bereiches und Veranlassen, dass die Position des ersten Erfassungs-Bereiches dem Leuchten-Kandidaten entspricht, mittels Verschieben, Drehbewegung oder/und Skalieren; sowie
Erfassen von Verkehrsampeln in dem dritten Erfassungsbereich.

## Revendications

1. Dispositif de détection de feux de circulation (100) comprenant:
une caméra (11) configurée pour capturer une image de l'environnement d'un objet mobile (5) et fixée à l'objet mobile (5) de telle sorte qu'un angle de vue et une direction de capture d'image de la caméra (11) par rapport à l'objet mobile (5) sont déterminés;
un détecteur d'auto-positionnement (12) configuré pour détecter une position de l'objet mobile (5) sur une carte;
une unité d'estimation de position de feux de circulation (13) configurée pour estimer une position relative de feux de circulation par rapport à l'objet mobile (5) sur la base d'informations cartographiques comprenant des informations de position du feu de circulation qui est présent sur l'environnement de l'objet mobile (5), la position de l'objet mobile (5) sur la carte et une direction de déplacement de l'objet mobile (5);
une première unité de réglage de zone de détection (21) configurée pour régler une première zone de détection à l'image pour chaque feu de circulation devant être présent à l'image, en fonction de la position relative des feux de circulation par rapport à la caméra (11); et
un détecteur de feux de circulation (17) configuré pour détecter les feux de circulation,
**caractérisé par**
une deuxième unité de réglage de zone de détection (14) configurée pour régler, lorsqu'il est prévu qu'une pluralité de feux de circulation est présente à l'image, une deuxième zone de détection à l'image comprenant la totalité de la pluralité de feux de circulation, sur la base des positions relatives des feux de circulation par rapport à la caméra (11);
un détecteur de lampe (15) configuré pour détecter, à partir de la deuxième zone de détection, une lampe candidate ayant une caractéristique d'une lampe d'un feu de circulation; et
une troisième unité de réglage de zone de détection (23) configurée pour définir une troisième zone de détection pour chacun de la pluralité de feux de circulation en corrigeant une position de la première zone de détection pour provoquer la position de la première zone de détection en utilisant au moins un élément parmi une translation, une rotation et une mise à l'échelle, de façon à correspondre à la lampe candidate,
dans lequel le détecteur de feux de circulation (17) est configuré pour détecter des feux de circulation provenant de la troisième zone de détection.

2. Dispositif de détection de feux de signalisation (100) selon la revendication 1,
dans lequel la troisième zone de détection est réglée pour avoir une échelle par rapport à l'image entière égale à l'échelle de la première zone de détection par rapport à l'image entière.

3. Dispositif de détection de feux de signalisation (100) selon la revendication 1,
dans lequel la troisième zone de détection est réglée pour avoir une zone plus petite que celle de la première zone de détection.

4. Dispositif de détection de feux de signalisation (100) selon l'une quelconque des revendications 1 à 3,
dans lequel le détecteur de feux de circulation (17) est configuré pour détecter un feu de circulation provenant des premières zones de détection lorsque le nombre de lampes candidates détectées par le détecteur de feux est de un.

5. Dispositif de détection de feux de signalisation (100) selon l'une quelconque des revendications 1 à 4,
dans lequel le détecteur de feux de circulation (17) est configuré pour détecter un feu de circulation provenant de la première zone de détection lorsque le nombre des premières zones de détection correspondant aux lampes candidates est de un à l'image.

6. Dispositif de détection de feux de signalisation (100) selon l'une quelconque des revendications 1 à 5,
dans lequel la troisième unité de réglage de zone de détection (23) définit une troisième zone de détection en corrigeant la première zone de détection à une position dans lequel la première zone de détection correspond le plus étroitement aux lampes candidates à l'image.

7. Procédé de détection de feux de circulation, comprenant les opérations suivantes:
estimer une position relative d'un feu de circulation par rapport à un objet mobile (5) sur la base d'informations cartographiques comprenant des informations de position des feux de circulation dans l'environnement de l'objet mobile (5), une position de l'objet mobile (5) sur une carte, et une direction de déplacement de l'objet mobile (5); et
le réglage d'une première zone de détection sur une image de l'environnement de l'objet mobile (5) capturé par une caméra (11) pour chaque feu de circulation prévu comme présent à l'image, sur la base de la position relative du feu de circulation par rapport à la caméra (11), dans lequel la caméra (11) est fixée sur l'objet mobile (5) de manière à déterminer un angle de vue et une direction de capture de la caméra (11) par rapport à l'objet mobile (5),
**caractérisé par**
lorsqu'il est prévu qu'une pluralité de feux de circulation soit présente à l'image, le réglage d'une deuxième zone de détection à l'image comprenant la totalité de la pluralité de feux de circulation, sur la base des positions relatives des feux de circulation par rapport à la caméra (11);
détecter, à partir de la deuxième zone de détection, une lampe candidate ayant une caractéristique d'une lampe d'un feu de circulation;
établir une troisième zone de détection pour chacun de la pluralité de feux de circulation en corrigeant une position de la première zone de détection pour provoquer la position de la première zone de détection en utilisant au moins l'un des éléments parmi une translation, une rotation et une mise à l'échelle, de manière à correspondre à la lampe candidate; et
détecter des feux de signalisation de la troisième zone de détection.
